# EUROPEAN PATENT APPLICATION

(11) **EP 2 378 424 A2**
(43) Date of publication of application: **19.10.2011**
(21) Application number: 11150979.0
(22) Date of filing: 14.01.2011
(51) Int. Cl.: G06F 11/10

(54) **Locating and correcting corrupt data or syndrome blocks**

(30) Priority: 16.04.2010 US 762213
(71) Applicant: LSI Corporation, Milpitas, CA 95035 (US)
(72) Inventor: Segura, Theresa L., Broomfield, CO 80020 (US); Batwara, Ashish, Wichita, KS 67226 (US); Lomelino, William G., Westminster, CO 80031 (US)
(74) Representative: Williams, David John

(57) **Abstract**

Disclosed is a method and system of determining a data block of a RAID level 6 stripe that has corrupted or incorrect data. For each data block of the stripe, a reconstructed data block is created using the other data blocks and the P syndrome data block. The reconstructed data block and the other data blocks are used to create a new Q syndrome data block. The new Q syndrome data block and the stored Q syndrome data block are compared. If the new Q syndrome data block and the stored Q syndrome data block match, the data block is marked as being suspected as having corrupted or incorrect data. This process is repeated for every data block in the stripe. If there is only a single suspected data block, the reconstructed data block is stored as a replacement of the suspect data block in the stripe.

## Description

### FIELD OF THE INVENTION

This invention relates to a system and method of maintaining data correctness and consistency in storage systems. More particularly, this invention relates to a method and system of determining which data block of a RAID level 6 stripe that has corrupted or incorrect data.

### BACKGROUND OF THE INVENTION

Mass storage systems continue to provide increased storage capacities to satisfy user demands. Photo and movie storage, and photo and movie sharing are examples of applications that fuel the growth in demand for larger and larger storage systems.

A solution to these increasing demands is the use of arrays of multiple inexpensive disks. These arrays may be configured in ways that provide redundancy and error recovery without any loss of data. These arrays may also be configured to increase read and write performance by allowing data to be read or written simultaneously to multiple disk drives. These arrays may also be configured to allow "hot-swapping" which allows a failed disk to be replaced without interrupting the storage services of the array. Whether or not any redundancy is provided, these arrays are commonly referred to as redundant arrays of independent disks (or more commonly by the acronym RAID). The 1987 publication by David A. Patterson, et al., from the University of California at Berkeley titled "A Case for Redundant Arrays of Inexpensive Disks (RAID)" discusses the fundamental concepts and levels of RAID technology.

RAID storage systems typically utilize a controller that shields the user or host system from the details of managing the storage array. The controller makes the storage array appear as one or more disk drives (or volumes). This is accomplished in spite of the fact that the data (or redundant data) for a particular volume may be spread across multiple disk drives.

### SUMMARY OF THE INVENTION

An embodiment of the invention may therefore comprise a method of maintaining the correctness of data, comprising: receiving a RAID stripe comprising a plurality of data blocks, a first stored syndrome block, and a second stored syndrome block; based on the plurality of data blocks, determining a first calculated syndrome block and a second calculated syndrome block; based on a determination that the first stored syndrome block and the first calculated syndrome block are not equal, and that the second stored syndrome block and the second calculated syndrome block are not equal, selecting a suspect data block of the plurality of data blocks using a method comprising: based on the first stored syndrome block, and a subset of the plurality of data blocks, the subset of the plurality of data blocks not including a one of the plurality of data blocks, determining a reconstructed one of the plurality of data blocks; based on the subset of the plurality of data blocks and the reconstructed one of the plurality of data blocks, determining a reconstructed second syndrome block; and, based on a determination that the reconstructed second syndrome block and the second stored syndrome block are equal, selecting the one of the plurality of data blocks as the suspect data block.

An embodiment of the invention may therefore further comprise a method of maintaining consistent data and syndromes in a RAID stripe, comprising: reading the RAID stripe, the RAID stripe comprising a plurality of data blocks, a first stored syndrome block, and a second stored syndrome block; based on the plurality of data blocks, determining a first calculated syndrome block; based on the plurality of data blocks, determining a second calculated syndrome block; determining a first equality indicator by comparing the first stored syndrome block to the first calculated syndrome block; determining a second equality indicator by comparing the second stored syndrome block to the second calculated syndrome block; if the first equality indicator indicates that the first stored syndrome block is not equal to the first calculated syndrome block and if the second equality indicator indicates that the second stored syndrome block is not equal to the second calculated syndrome block, determining at least one suspect block using a method comprising: for each one of the plurality of data blocks: reconstruct a reconstructed one of the data blocks using the first stored syndrome block; determine a reconstructed second syndrome block using the reconstructed one of the data blocks and the plurality of data blocks except the one of the plurality of data blocks; determine a suspect block indicator, associated with the one of the data blocks, that indicates whether the second stored syndrome block is equal to the reconstructed second syndrome block; if there is a single one of the plurality of data blocks having an associated suspect block indicator indicating that the second stored syndrome block is equal to the reconstructed second syndrome block, storing the reconstructed one of the data blocks associated with the single one of the plurality of data blocks in the RAID stripe.

An embodiment of the invention may therefore further comprise a storage system, comprising: a plurality of disk drives configured to provide a RAID stripe; a RAID processor configured to receive the RAID stripe, the RAID stripe comprising a plurality of data blocks, a first stored syndrome block, and a second stored syndrome block, the RAID processor configured to: determine a first calculated syndrome block and a second calculated syndrome block based on the plurality of data blocks; determine that the first stored syndrome block and the first calculated syndrome block are not equal, and that the second stored syndrome block and the second calculated syndrome block are not equal; determine a reconstructed one of the plurality of data blocks based on the first stored syndrome block and a subset of the plurality of data blocks, the subset of the plurality of data blocks not including a one of the plurality of data blocks; determine a reconstructed second syndrome block based on the subset of the plurality of data blocks and the reconstructed one of the plurality of data blocks; and, select the one of the plurality of data blocks as the suspect data block based on a determination that the reconstructed second syndrome block and the second stored syndrome block are equal.

In an arrangement there is provided a computer readable medium having instructions stored thereon for maintaining consistent data and syndromes in a RAID stripe that, when executed by a computer, at least instruct the computer to: read said RAID stripe, said RAID stripe comprising a plurality of data blocks, a first stored syndrome block, and a second stored syndrome block; based on said plurality of data blocks, determine a first calculated syndrome block; based on said plurality of data blocks, determine a second calculated syndrome block; determine a first equality indicator by comparing said first stored syndrome block to said first calculated syndrome block; determine a second equality indicator by comparing said second stored syndrome block to said second calculated syndrome block; and, if said first equality indicator indicates that said first stored syndrome block is not equal to said first calculated syndrome block and if said second equality indicator indicates that said second stored syndrome block is not equal to said second calculated syndrome block, determine at least one suspect block using a method comprising: for each one of said plurality of data blocks: reconstruct a reconstructed one of said data blocks using said first stored syndrome block; determine a reconstructed second syndrome block using said reconstructed one of said data blocks and said plurality of data blocks except said one of said plurality of data blocks; determine a suspect block indicator, associated with said one of said data blocks, that indicates whether said second stored syndrome block is equal to said reconstructed second syndrome block; and, if there is a single one of said plurality of data blocks having an associated suspect block indicator indicating that said second stored syndrome block is equal to said reconstructed second syndrome block, storing said reconstructed one of said data blocks associated with said single one of said plurality of data blocks in said RAID stripe.

The plurality of data blocks, the first stored syndrome block, and the second stored syndrome blocks may each be associated with one of a plurality of disk drives;

Said first calculated syndrome block may be determined by a bitwise XOR of said plurality of data blocks, and said second calculated syndrome block is determined by a Reed-Solomon code.

The computer may further be instructed to: if there is more than a single one of said plurality of data blocks having an associated suspect block indicator indicating that said second stored syndrome block is not equal to said reconstructed second syndrome block, store said first calculated syndrome block and said second calculated syndrome block in said RAID stripe.

### BRIEF DESCRIPTION OF THE DRAWINGS

Figure 1 is a block diagram illustrating a RAID storage system.

Figure 2 is a block diagram illustrating a RAID storage system with simple parity (P) and Reed-Solomon (Q) redundant information.

Figure 3 is a flowchart illustrating a method of maintaining the correctness of data.

Figure 4 is a flowchart illustrating a method of determining potential corrupted data blocks.

Figure 5 is a block diagram of a computer.

### DETAILED DESCRIPTION OF THE EMBODIMENTS

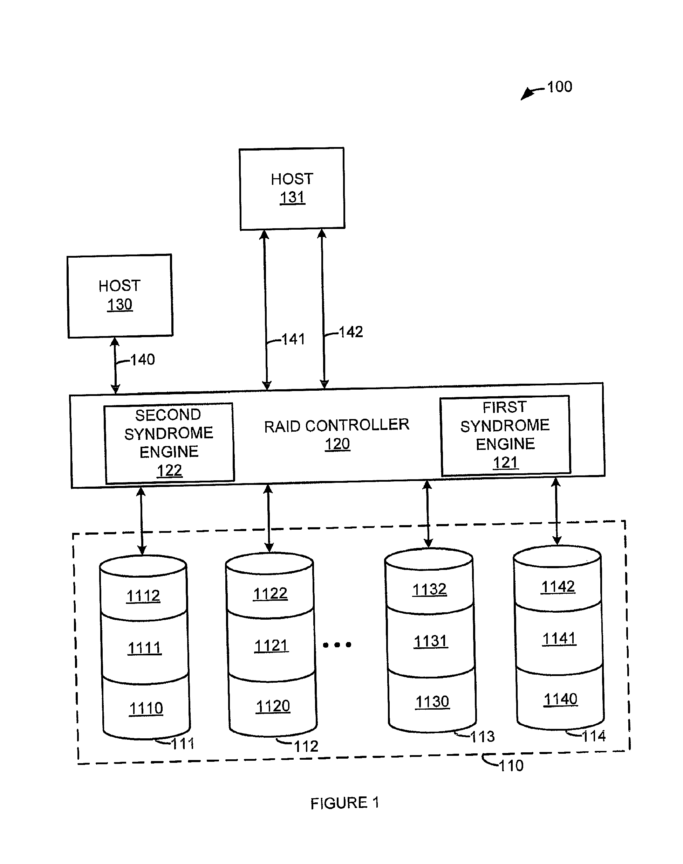

Figure 1 is a block diagram illustrating a RAID storage system. In Figure 1, storage system 100 is comprised of disk array 110, RAID controller 120, host 130, host 131, virtual volume 140, virtual volume 141, and virtual volume 142. Disk array 110 includes at least first drive 111, second drive 112, third drive 113, and fourth drive 114. Disk array 110 may also include more disk drives. However, these are omitted from Figure 1 for the sake of brevity. First drive 111 comprises data blocks 1110, 1111, and 1112. Second drive 112 comprises data blocks 1120, 1121, and 1122. Third drive 113 comprises first stored syndrome blocks 1130, 1131, and 1132. Fourth drive 114 comprises second stored syndrome blocks 1140, 1141, and 1142.

Disk array 110, and drives 111-114 are operatively coupled to RAID controller 120. Thus, RAID controller 120 may operate to control, span, and/or stripe drives 111-114 and blocks 1110-1112, 1120-1122, 1130-1132, and 1140-1142 to provide RAID level 6 (RAID 6) functionality. RAID 6 may use block-level striping with two parity blocks distributed across all member disks of disk array 110. This spanning and/or striping may result in stored syndrome blocks 1130-1132 and 1140-1142 actually residing on one or more of drives 111-114. Likewise, data blocks 1110-1112 and 1120-1122 may reside on one or more of drives 111-114. However, for the sake of clarity and brevity, syndrome blocks 1130-1132 and 1140-1142 will be shown and discussed as residing on drives 113 and 114. Data blocks 1110-1112 and 1120-1122 will be shown and discussed as residing on drives 111 and 112. It should be noted that drives 111-114 may be actual physical drive, or virtual drives. Thus, RAID stripes comprising one or more data blocks , a first syndrome block, and a second syndrome block may be stored in a variety of combinations or mappings of data blocks 1110-1112 and 1120-1122 (and other data blocks, not shown) and syndrome blocks 1130-1132 and 1140-1142.

Raid controller 120 includes first syndrome engine 121. First syndrome engine 121 may be a module or process that calculates and/or checks first stored syndrome blocks 1130-1132 based on at least data blocks 1110-1112 and 1120-1122. First syndrome engine 121 may include dedicated hardware to increase the performance of calculations and/or checks of first stored syndrome blocks 1130-1132. In an embodiment, first syndrome engine may calculate a bitwise XOR of data blocks 1110-1112 in order to calculate and/or check first stored syndrome blocks 1130-1132.

Raid controller 120 includes second syndrome engine 122. Second syndrome engine 122 may be a module or process that calculates and/or checks second stored syndrome blocks 1140-1142 based on at least data blocks 1110-1112 and 1120-1122. Second syndrome engine 122 may include dedicated hardware to increase the performance of calculations and/or checks of second stored syndrome blocks 1140-1142. In an embodiment, second syndrome engine may calculate a Reed-Solomon code of data blocks 1110-1112 and 1120-1122 in order to calculate and/or check second stored syndrome blocks 1140-1142. It should be understood, however, that other methods or encodings that provide RAID 6 functionality may be used. For example, orthogonal dual parity check data and diagonal parity may be used to implement RAID 6 functionality.

RAID controller 120 may project virtual volume 140 to host 130. RAID controller 120 may project virtual volumes 141-142 to host 131. RAID controller 120 may also project additional virtual volumes. However, these are omitted from Figure 1 for the sake of brevity. Once created from the RAID configurations, virtual volumes 140-142 may be accessed by host computers 130-131.

In an embodiment, RAID controller 120 isolates and corrects data blocks 1110-1112 and 1120-1122 or syndrome blocks 1130-1132 and 1140-1142. The errors that RAID controller 120 corrects are signified by a mismatch between the data stored by data blocks 1110-1112 and 1120-1122 and at least one of syndrome blocks 1130-1132 and 1140-1142.

RAID controller 120 reads the data and the syndrome blocks of a RAID stripe stored by disk array 110. RAID controller 120 calculates a first syndrome block and a second syndrome block based on the data read from the RAID stripe. These calculated syndrome blocks are compared with the syndrome blocks that were stored on disk array 110 (e.g., the stored syndrome blocks). The results of these comparisons may result in indicators of the equality of the calculated and stored syndrome blocks being created or stored.

If both the stored and calculated syndrome blocks match, then RAID controller 120 has not found a mismatch between the data stored a data blocks 1110-1112 and 1120-1122 and either one of syndrome blocks 1130-1132 and 1140-1142. If the first calculated syndrome block does not match the first stored syndrome block, and the second calculated syndrome block matches the second stored syndrome block, RAID controller 120 determines that the data in the stripe, the second stored syndrome block, and the first calculated syndrome block are correct. Therefore, RAID controller 120 writes the first calculated syndrome block to disk array 110.

If the second calculated syndrome block does not match the second stored syndrome block, and the first calculated syndrome block matches the first stored syndrome block, RAID controller 120 determines that the data in the stripe, the first stored syndrome block, and the second calculated syndrome block are correct. Therefore, RAID controller 120 writes the second calculated syndrome block to disk array 110.

If the first calculated syndrome block does not match the first stored syndrome block, and the second calculated syndrome block does not match the second stored syndrome block, RAID controller 120 determines that one or more of the data blocks 1110-1112 and 1120-1122 is likely incorrect. RAID controller 120 proceeds to determine which one or more of the data blocks in the RAID stripe are inconsistent with the other data blocks and the first and second (stored or calculated) syndrome blocks.

Raid controller 120 selects a first data block. This first data block is reconstructed using the other data blocks of the RAID stripe and the first stored syndrome block. The reconstructed first data block is then used along with the other data blocks to calculate a new second syndrome block. This new second syndrome block is compared to the second stored syndrome block. If the new second syndrome block and the second stored syndrome block match, then this first data block is marked as a suspect for holding bad data. This process is repeated for each of the data blocks in the RAID stripe. This marking may result in a suspect block indicator associated with the corresponding block being created or stored.

Once all of the data blocks in the RAID stripe have been scanned as described above, RAID controller 120 determines if more than one data block has been marked as a suspect for holding bad data. If a single data block has been identified as a suspect for holding bad data, RAID controller 120 reconstructs (or uses the previously calculated) data for that block from the first stored syndrome block and the other data blocks of the RAID stripe. If more than one drive has been identified as a suspect for holding bad data, RAID controller 120 may regenerate (or uses the previously calculated) first and second calculated syndrome blocks and write one or both of them to disk array 110. It should be understood that writing one of more of the regenerated or previously calculated first and second calculated syndrome blocks is an optional step. In an embodiment, RAID controller 120 may set an indicator marking the entire RAID stripe as being suspected of holding bad data (and/or one or more bad syndromes).

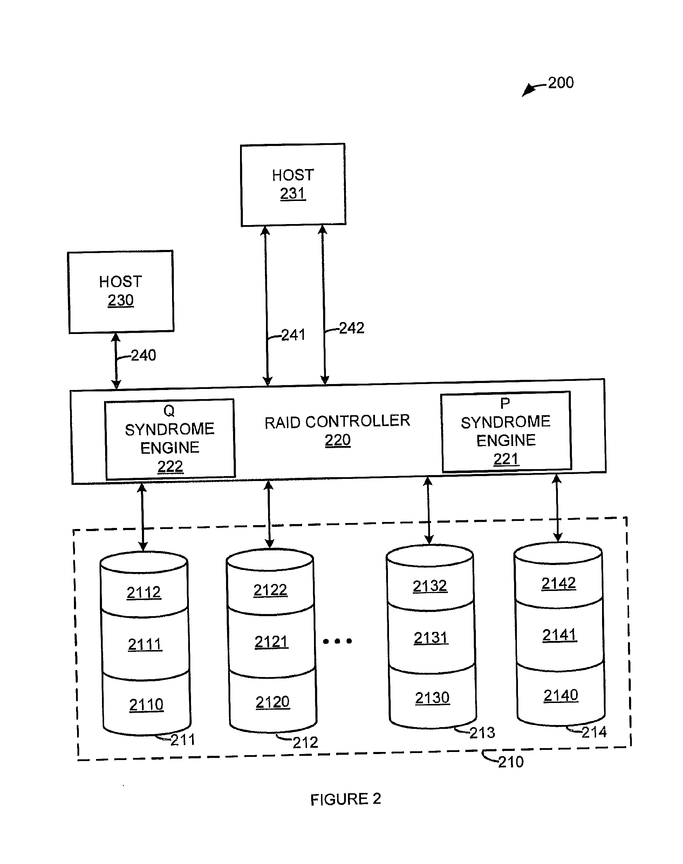

Figure 2 is a block diagram illustrating a RAID storage system with simple parity (P) and Reed-Solomon (Q) redundant information. In Figure 2, storage system 200 is comprised of disk array 210, RAID controller 220, host 230, host 231, virtual volume 240, virtual volume 241, and virtual volume 242. Disk array 210 includes at least drives 211-214. Disk array 210 may also include more disk drives. However, these are omitted from Figure 2 for the sake of brevity. First drive 211 comprises data blocks 2110, 2111, and 2112. Second drive 212 comprises data blocks 2120, 2121, and 2122. Third drive 213 comprises stored P syndrome blocks 2130, 2131, and 2132. Fourth drive 214 comprises stored Q syndrome blocks 2140, 2141, and 2142.

Disk array 210, and drives 211-214 are operatively coupled to RAID controller 220. Thus, RAID controller 220 may operate to control, span, and/or stripe drives 211-214 and blocks 2110-2112, 2120-2122, 2130-2132, and 2140-2142 to provide RAID level 6 (RAID 6) functionality. RAID 6 may use block-level striping with two parity blocks distributed across all member disks. This spanning and/or striping may result in stored P syndrome blocks 2130-2132 and stored Q syndrome blocks 2140-2142 actually residing on one or more of drives 211-214. Likewise, data blocks 2110-2112 and 2120-2122 may reside on one or more of drives 211-214. However, for the sake of clarity and brevity, stored P syndrome blocks 2130-2132 and stored Q syndrome blocks 2140-2142 will be shown and discussed as residing on drives 213 and 214. Data blocks 2110-2112 and 2120-2122 will be shown and discussed as residing on drives 211 and 212. It should be noted that drives 211-214 may be actual physical drive, or virtual drives. Thus, RAID stripes comprising one or more data blocks, a P syndrome block, and a Q syndrome block may be stored in a variety of combinations or mappings of data blocks 2110-2112 and 2120-2122 (and other data blocks, not shown) and stored P syndrome blocks 2130-2132 and stored Q syndrome block 2140-2142.

Raid controller 220 includes P syndrome engine 221. P syndrome engine 221 may be a module or process that calculates and/or checks stored P syndrome blocks 2130-2132 based on at least data blocks 2110-2112 and 2120-2122. P syndrome engine 221 may include dedicated hardware to increase the performance of calculations and/or checks of stored P syndrome blocks 2130-2132. In an embodiment, P syndrome engine calculates a bitwise XOR of data blocks 2110-2112 in order to calculate and/or check stored P syndrome blocks 2130-2132.

Raid controller 220 includes Q syndrome engine 222. Q syndrome engine 222 may be a module or process that calculates and/or checks stored Q syndrome blocks 2142-2140 based on at least data blocks 2110-2112 and 2120-2122. Q syndrome engine 222 may include dedicated hardware to increase the performance of calculations and/or checks of stored Q syndrome blocks 2142-2140. In an embodiment, Q syndrome engine calculates a Reed-Solomon code of data blocks 2110-2112 in order to calculate and/or check stored Q syndrome blocks 2140-2142.

RAID controller 220 may project virtual volume 240 to host 230. RAID controller 1220 may project virtual volumes 241-242 to host 231. RAID controller 220 may also project additional virtual volumes. However, these are omitted from Figure 2 for the sake of brevity. Once created from the RAID configurations, virtual volumes 240-242 may be accessed by host computers 230-231.

In an embodiment, RAID controller 220 isolates and corrects data blocks 2110-2112 and 2120-2122 or stored P and Q syndrome blocks 2130-2132 and 2140-2142. The errors that RAID controller 220 corrects are signified by a mismatch between the data stored by data blocks 2110-2112 and 2120-2122 and at least one of the stored P syndrome block 1130-1132 and the stored Q syndrome block 1140-1142 of the RAID stripe.

RAID controller 220 reads the data blocks and the P and Q syndrome blocks of a RAID stripe stored by disk array 210. RAID controller 220 calculates a P syndrome block and a Q syndrome block (denoted P_{c} and Q_{c}, respectively) based on the data blocks read from the RAID stripe. These calculated syndrome blocks (P_{c} and Q_{c}) are compared with the syndrome blocks that were stored on disk array 210 (denoted Pₛ and Qₛ, respectively). The results of these comparisons may result in indicators of the equality of the calculated and stored syndrome blocks being created or stored.

If both the stored and calculated syndrome blocks match (*i.e.,* if P_{c}=Pₛ, and Q_{c}=Qₛ) then RAID controller 220 has not found a mismatch between the stored data blocks 2110-2112 and 2120-2122 and either one of the stored P syndrome block 2130-2132 and the stored Q syndrome block 2140-2142 of the RAID stripe. If the calculated P syndrome block does not match the stored P syndrome block, and the calculated Q syndrome block matches the stored Q syndrome block (*i.e*., if P_{c}≠ Pₛ, and Q_{c}=Qₛ), RAID controller 220 determines that the data blocks in the stripe, the stored Q syndrome block, and the calculated P syndrome block are correct. Therefore, RAID controller 220 writes the calculated P syndrome block, P_{c}, to disk array 210.

If the calculated Q syndrome block does not match the stored Q syndrome block, and the calculated P syndrome block matches the stored P syndrome block (*i.e*., if P_{c}=Pₛ, and Q_{c} ≠ Qₛ), RAID controller 220 determines that the data blocks in the stripe, the stored P syndrome block, and the calculated Q syndrome block are correct. Therefore, RAID controller 220 writes the calculated Q syndrome block, Q_{c}, to disk array 210.

If the calculated P syndrome block does not match the stored P syndrome block, and the calculated Q syndrome block does not match the stored Q syndrome block (*i.e.,* if P_{c}≠ Pₛ, and Q_{c}≠ Qₛ), RAID controller 220 determines that one or more of the data blocks 2110-2112 and 2120-2122 associated with the RAID stripe is likely incorrect. RAID controller 220 proceeds to determine which one or more of the data blocks in the RAID stripe are inconsistent with the other data blocks and the stored P and Q syndrome blocks.

To determine which of the data blocks in the RAID stripe are inconsistent with the other data blocks, and the stored P and Q syndrome blocks, RAID controller 220 selects a first data block. This first data block is reconstructed using the other data blocks of the RAID stripe and the stored P syndrome block. The reconstructed first data block is then used along with the other data blocks to calculate a new Q syndrome block (denoted Qₙ). This new Q syndrome block is compared to the stored Q syndrome block. If the new Q syndrome block and the stored Q syndrome block match (*i.e*., Qn=Qₛ), then this first data block is selected as a suspect for holding bad data. This marking may result in a suspect block indicator associated with the data block being created or stored. This process is repeated for each of the data blocks in the RAID stripe.

Once all of the data blocks in the RAID stripe have been scanned as described above, RAID controller 220 determines if more than one data block has been marked as a suspect for holding bad data. If a single drive has been identified as a suspect for holding bad data, RAID controller 220 reconstructs (or uses the previously calculated) data for that block from the stored P syndrome block and the other data blocks of the RAID stripe. If more than one drive has been identified as a suspect for holding bad data, RAID controller 220 may regenerate (or use the previously calculated P_{c} and Q_{c}) the calculated P and Q syndrome blocks and write one or both of them to disk array 210. It should be understood that writing one of more of the regenerated or previously calculated P and Q syndrome blocks is an optional step. In an embodiment, RAID controller 220 may set an indicator marking the entire RAID stripe as being suspected of holding bad data (and/or one or more of a bad P and Q syndrome block).

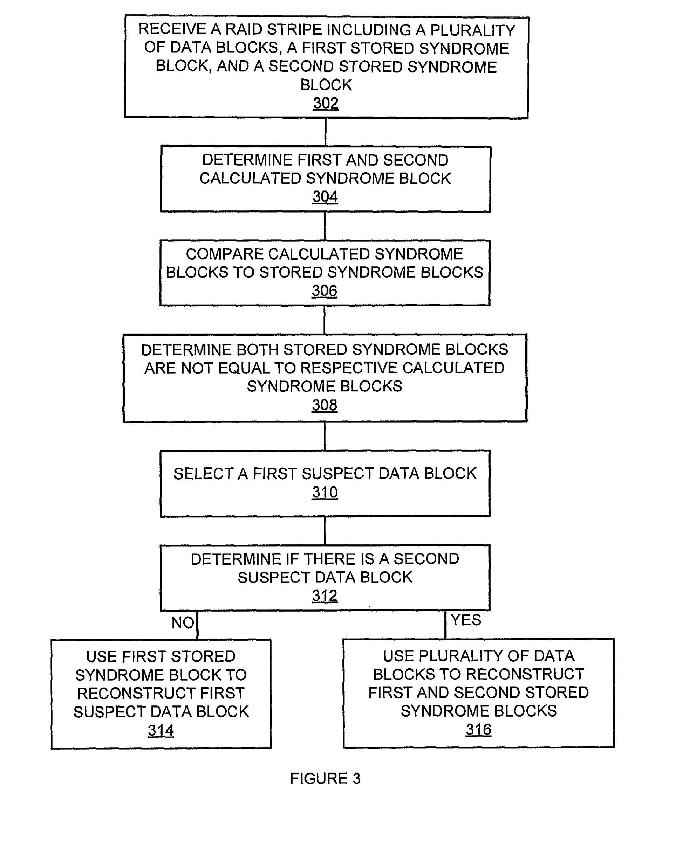

Figure 3 is a flowchart illustrating a method of maintaining the correctness of data. The steps illustrated in Figure 3 may be performed by one or more elements of storage system 100 and storage system 200.

A RAID stripe including a plurality of data blocks, a first stored syndrome block, and a second stored syndrome block is received (302). For example, RAID controller 220 may receive a RAID stripe from disk array 210. This RAID stripe may include a plurality of data blocks, a stored P syndrome block (Pₛ), and a stored Q syndrome block (Qₛ). A first calculated syndrome block and a second calculated syndrome block are determined (304). For example, P syndrome engine 221 may calculate a P syndrome block (P_{c}) based on the plurality of data blocks in the RAID stripe. Q syndrome engine 222 may calculate a Q syndrome block (Q_{c}) based on the plurality of data blocks in the RAID stripe.

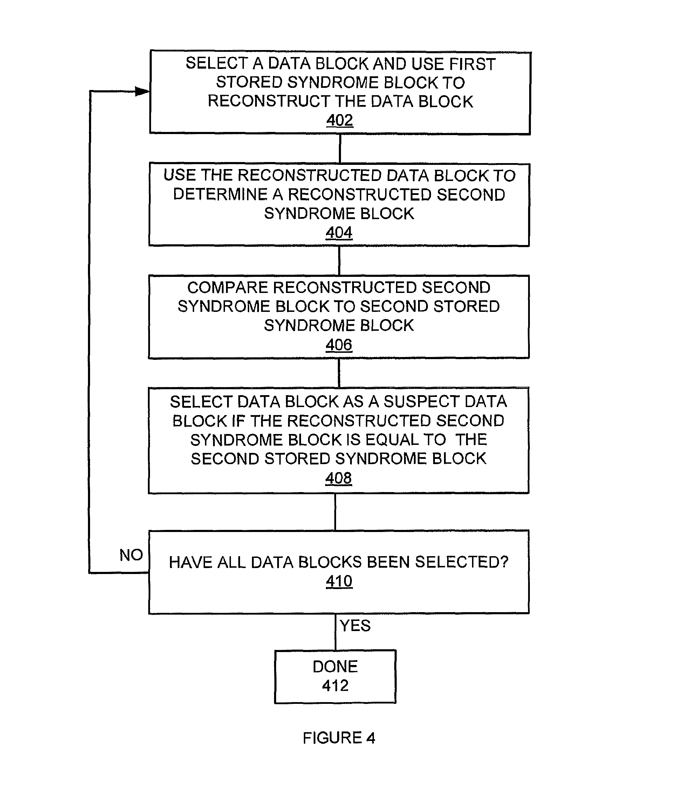

Calculated syndrome blocks are compared to stored syndrome blocks (306). For example, RAID controller 220 may compare the syndrome blocks calculated in box 304, P_{c} and Q_{c}, to the stored syndrome blocks received in block 302, Pₛ and Qₛ, respectively. Both stored syndrome blocks are determined to be not equal to their respective calculated syndrome blocks (308). For example, RAID controller 220 may determine the calculated P syndrome block does not match the stored P syndrome block, and the calculated Q syndrome block does not match the stored Q syndrome block (*i.e*., if P_{c}≠ Pₛ, and Q_{c}≠ Qₛ). A first suspect data block is selected (310). For example, RAID controller 220 may select a first data block of the data blocks in the RAID stripe as a suspect for having incorrect or corrupted data. This process of selection is discussed in further detail with respect to Figure 4, below.

If there is a second suspect data block, flow proceeds to block 316. If there is not a second suspect data block, flow proceeds to block 314 (312). For example, RAID controller 220 may determine there is only a single suspect data block. If there is not a second suspect data block, the first stored syndrome block is used to reconstruct the first suspect data block (314). For example, RAID controller 220 may use the stored P syndrome block (Pₛ) and the other data blocks from the RAID stripe to reconstruct the data block suspected of having incorrect or corrupted data. This reconstructed data block may be written by RAID controller 220 to disk array 210 to remove the inconsistencies between the plurality of data blocks and the P and Q syndrome data blocks in the stored RAID stripe.

If there is a second suspect data block, the plurality of data blocks are used to reconstruct the first and second stored syndrome blocks (316). For example, RAID controller 220 may use the data blocks of the RAID stripe to calculate a new P syndrome block and a new Q syndrome block. These reconstructed P and Q syndrome blocks may be written by RAID controller 220 to disk array 210 to remove the inconsistencies between the plurality of data blocks and the syndrome data blocks in the stored RAID stripe. It should be understood that block 316 is optional and that writing the reconstructed first and second syndrome blocks may not be performed in some embodiments. In an embodiment, an indicator that the entire RAID stripe is suspected of holding bad data (and/or syndrome) may be stored.

Figure 4 is a flowchart illustrating a method of maintaining the correctness of data. The steps illustrated in Figure 4 may be performed by one or more elements of storage system 100 and storage system 200.

A data block is selected and the first stored syndrome block is used to reconstruct the data block (402). For example, RAID controller 220 may select a data block. The other data blocks of the RAID stripe, and the P syndrome block may be used to reconstruct the data block. The reconstructed data block is used to determine a reconstructed second syndrome block (404). For example, RAID controller 220 may use the reconstructed data block to calculate a reconstructed Q syndrome block (Qᵣ).

The reconstructed second syndrome block is compared to the second stored syndrome block (406). For example, RAID controller 220 may compare the reconstructed Q syndrome block (Qᵣ) to the stored Q syndrome block (Qₛ) of the RAID stripe. If the reconstructed second syndrome block is equal to the second stored syndrome block, the data block is selected as a suspect data block (408). For example, RAID controller 220 may select the data block as a suspect for having incorrect or corrupted data if the reconstructed Q syndrome block is equal to stored Q syndrome block of the RAID stripe (*i.e*., Qᵣ = Qₛ).

Once all the blocks have been selected, flow proceeds to block 412 and the process is done. If not all of the blocks have been selected, flow proceeds back to block 402 for the selection of a new data block to be tested for selection and marking as a data block suspected as having incorrect or corrupted data.

The systems, drives, controller, engines, and functions described above may be implemented with or executed by one or more computer systems. The methods described above may be stored on a computer readable medium. Many of the elements of storage system 100 and storage system 200 may be, comprise, or include computers systems. This includes, but is not limited to RAID controller 120, RAID controller 220, first syndrome engine 121, second syndrome engine 122, disk array 110, disk drives 111-114, hosts 130-131, P syndrome engine 221, Q syndrome engine 222, disk array 210, disk drives 211-214, and hosts 230-231.

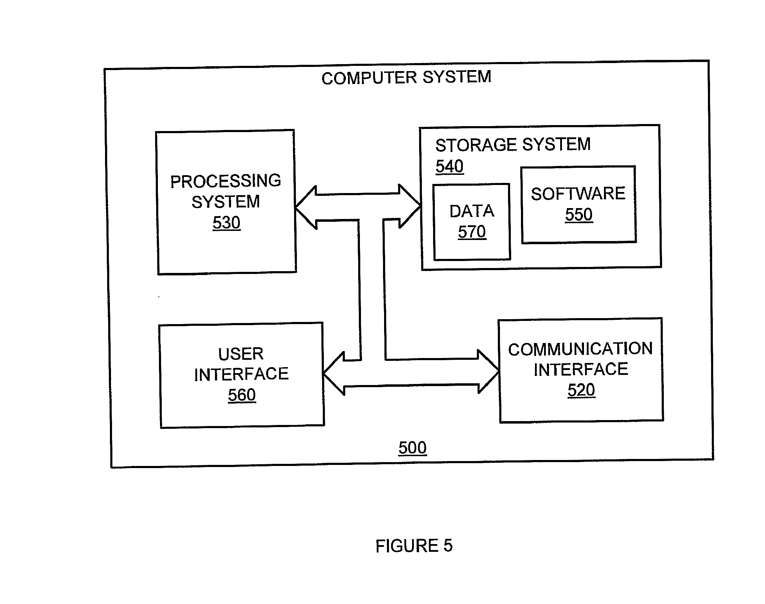

Figure 5 illustrates a block diagram of a computer system. Computer system 500 includes communication interface 520, processing system 530, storage system 540, and user interface 560. Processing system 530 is operatively coupled to storage system 540. Storage system 540 stores software 550 and data 570. Processing system 530 is operatively coupled to communication interface 520 and user interface 560. Computer system 500 may comprise a programmed general-purpose computer. Computer system 500 may include a microprocessor. Computer system 500 may comprise programmable or special purpose circuitry. Computer system 500 may be distributed among multiple devices, processors, storage, and/or interfaces that together comprise elements 520-570.

Communication interface 520 may comprise a network interface, modem, port, bus, link, transceiver, or other communication device. Communication interface 520 may be distributed among multiple communication devices. Processing system 530 may comprise a microprocessor, microcontroller, logic circuit, or other processing device. Processing system 530 may be distributed among multiple processing devices. User interface 560 may comprise a keyboard, mouse, voice recognition interface, microphone and speakers, graphical display, touch screen, or other type of user interface device. User interface 560 may be distributed among multiple interface devices. Storage system 540 may comprise a disk, tape, integrated circuit, RAM, ROM, network storage, server, or other memory function. Storage system 540 may be a computer readable medium. Storage system 540 may be distributed among multiple memory devices.

Processing system 530 retrieves and executes software 550 from storage system 540. Processing system may retrieve and store data 570. Processing system may also retrieve and store data via communication interface 520. Processing system 550 may create or modify software 550 or data 570 to achieve a tangible result. Processing system may control communication interface 520 or user interface 570 to achieve a tangible result. Processing system may retrieve and execute remotely stored software via communication interface 520.

Software 550 and remotely stored software may comprise an operating system, utilities, drivers, networking software, and other software typically executed by a computer system. Software 550 may comprise an application program, applet, firmware, or other form of machine-readable processing instructions typically executed by a computer system. When executed by processing system 530, software 550 or remotely stored software may direct computer system 500 to operate as described herein.

The foregoing description of the invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A method of maintaining the correctness of data, comprising:
receiving a RAID stripe comprising a plurality of data blocks, a first stored syndrome block, and a second stored syndrome block;
based on said plurality of data blocks, determining a first calculated syndrome block and a second calculated syndrome block; and,
based on a determination that said first stored syndrome block and said first calculated syndrome block are not equal, and that said second stored syndrome block and said second calculated syndrome block are not equal, selecting a suspect data block of said plurality of data blocks using a method comprising:
based on said first stored syndrome block, and a subset of said plurality of data blocks, said subset of said plurality of data blocks not including a one of said plurality of data blocks, determining a reconstructed one of said plurality of data blocks;
based on said subset of said plurality of data blocks and said reconstructed one of said plurality of data blocks, determining a reconstructed second syndrome block; and,
based on a determination that said reconstructed second syndrome block and said second stored syndrome block are equal, selecting said one of said plurality of data blocks as said suspect data block.

2. The method of claim 1, wherein said first stored syndrome block is determined by a bitwise XOR of said plurality of data blocks, and said second stored syndrome block is determined by a Reed-Solomon code.

3. The method of claim 1, further comprising:
selecting a second suspect data block of said plurality of data blocks using a method comprising:
based on said first stored syndrome block, and a second subset of said plurality of data blocks, said second subset of said plurality of data blocks not including a second of said plurality of data blocks, determining a reconstructed second of said plurality of data blocks;
based on said second subset of said plurality of data blocks and said reconstructed second of said plurality of data blocks, determining a second reconstructed second syndrome block; and,
based on a determination that said second reconstructed second syndrome block and said second stored syndrome block are equal, selecting said second of said plurality of data blocks as said second suspect data block.

4. The method of claim 3, further comprising:
regenerating and storing said first stored syndrome block and said second stored syndrome block using said plurality of data blocks.

5. The method of claim 1, further comprising:
based on a determination that said first stored syndrome block and said first calculated syndrome block are equal, storing said second calculated syndrome block in said RAID stripe.

6. The method of claim 1, further comprising:
based on a determination that said second stored syndrome block and said second calculated syndrome block are equal, storing said first calculated syndrome block in said RAID stripe.

7. A method of maintaining consistent data and syndromes in a RAID stripe, comprising:
reading said RAID stripe, said RAID stripe comprising a plurality of data blocks, a first stored syndrome block, and a second stored syndrome block;
based on said plurality of data blocks, determining a first calculated syndrome block;
based on said plurality of data blocks, determining a second calculated syndrome block;
determining a first equality indicator by comparing said first stored syndrome block to said first calculated syndrome block;
determining a second equality indicator by comparing said second stored syndrome block to said second calculated syndrome block; and,
if said first equality indicator indicates that said first stored syndrome block is not equal to said first calculated syndrome block and if said second equality indicator indicates that said second stored syndrome block is not equal to said second calculated syndrome block, determining at least one suspect block using a method comprising:
for each one of said plurality of data blocks:
reconstruct a reconstructed one of said data blocks using said first stored syndrome block;
determine a reconstructed second syndrome block using said reconstructed one of said data blocks and said plurality of data blocks except said one of said plurality of data blocks;
determine a suspect block indicator, associated with said one of said data blocks, that indicates whether said second stored syndrome block is equal to said reconstructed second syndrome block; and,
if there is a single one of said plurality of data blocks having an associated suspect block indicator indicating that said second stored syndrome block is equal to said reconstructed second syndrome block, storing said reconstructed one of said data blocks associated with said single one of said plurality of data blocks in said RAID stripe.

8. The method of claim 7, wherein the plurality of data blocks, the first stored syndrome block, and the second stored syndrome blocks are each associated with one of a plurality of disk drives;

9. The method of claim 7, wherein said first calculated syndrome block is determined by a bitwise XOR of said plurality of data blocks, and said second calculated syndrome block is determined by a Reed-Solomon code.

10. The method of claim 7, further comprising:
if there is more than a single one of said plurality of data blocks having an associated suspect block indicator indicating that said second stored syndrome block is not equal to said reconstructed second syndrome block, storing said first calculated syndrome block and said second calculated syndrome block in said RAID stripe.

11. A storage system, comprising:
a plurality of disk drives configured to provide a RAID stripe;
a RAID processor configured to receive said RAID stripe, said RAID stripe comprising a plurality of data blocks, a first stored syndrome block, and a second stored syndrome block, said RAID processor configured to:
determine a first calculated syndrome block and a second calculated syndrome block based on said plurality of data blocks;
determine that said first stored syndrome block and said first calculated syndrome block are not equal, and that said second stored syndrome block and said second calculated syndrome block are not equal;
determine a reconstructed one of said plurality of data blocks based on said first stored syndrome block and a subset of said plurality of data blocks, said subset of said plurality of data blocks not including a one of said plurality of data blocks,;
determine a reconstructed second syndrome block based on said subset of said plurality of data blocks and said reconstructed one of said plurality of data blocks; and,
select said one of said plurality of data blocks as said suspect data block based on a determination that said reconstructed second syndrome block and said second stored syndrome block are equal.

12. The storage system of claim 1, wherein said first stored syndrome block is determined by a bitwise XOR of said plurality of data blocks, and said second stored syndrome block is determined by a Reed-Solomon code.

13. The storage system of claim 11, wherein said RAID processor is further configured to:
select a second suspect data block of said plurality of data blocks

14. The storage system of claim 13, wherein said RAID processor is further configured to:
regenerate said first stored syndrome block and said second stored syndrome block using said plurality of data blocks.

15. The storage system of claim 11, wherein said RAID processor is further configured to:
store said first calculated syndrome block in plurality of disk drives based on a determination that said first stored syndrome block and said first calculated syndrome block are equal;
